# EUROPEAN PATENT SPECIFICATION

(11) **EP 2 646 350 B1**
(45) Date of publication and mention of the grant of the patent: **12.11.2014**
(21) Application number: 11788236.5
(22) Date of filing: 21.11.2011
(51) Int. Cl.: B65G 17/08

(54) **LINKED BELT**
VERBUNDENER GURT
COURROIE À MAILLONS

(30) Priority: 29.11.2010 NL 2005773
(43) Date of publication of application: 09.10.2013
(73) Proprietor: Kaak, Johan Hendrik Bernard, 7011 DZ Gaanderen (NL)
(72) Inventor: VAN DER BORG, Lodewijk Stephanus Magaretha Joseph, NL-7084 BG Breedenbroek (NL)
(74) Representative: Peters, Sebastian Martinus
(86) International application number: PCT/NL2011/050792
(87) International publication number: WO 2012/074383

(56) References cited:
- EP-A1- 0 620 169

## Description

### BACKGROUND OF THE INVENTION

The invention relates to a conveyor belt according to the preamble of claim 1.

Such conveyor belts are mainly used in the food industry. Said conveyor belts among others need to be easy to clean and therefore often have an open structure. They consist of elongated transversely oriented synthetic support members or links, having a type of zigzag-shape, which in the direction of the conveyor belt are inserted into each other, and at that location are connected to each other by connecting rods.

Such a conveyor belt is for instance known from European patent 0 911 279. In this document a confining element is described comprising a cylindrical body, wherein the cylindrical body at a first outer end thereof is provided with a radially extending flange member, and comprises a radially extending edge member that is spaced apart from the first outer end of the cylindrical body and placed at a same side of the cylindrical body. When placing said known confining element an edge is confined in or near an outer end of the accommodation space of a link between the edge member and the flange member as a result of which the confining element is firmly confined in the accommodation space. A conveyor belt according to the preamble of claim 1 is known from document EP 0 620 169.

A drawback of the known confining element is that it is very difficult to remove it from the accommodation space.

### SUMMARY OF THE INVENTION

It is an object of the invention to provide a conveyor belt having a confining element that is easy to remove.

For that purpose the invention provides a conveyor belt according to the preamble, characterized in that the covering cap is integrally formed with the link.

In one embodiment the form closure comprises one or more snap closures that are adapted for, at least in the position for closing off the accommodation space, engaging behind one or more edges at or near the outer end of the link for locking the covering cap.

In one embodiment the covering cap comprises a snap pin, which in the position for closing off the accommodation space at least partially extends into the accommodation space, wherein the snap pin comprises a substantially cylindrical stopper and comprises two legs extending from the stopper in a longitudinal direction of the snap pin, which legs are spaced apart in a direction transverse to the longitudinal direction, wherein a first leg at its side that faces the exterior of the snap pin comprises a substantially radially extending first edge, wherein a second leg at a side that faces an exterior of the snap pin comprises a substantially smooth wall, and wherein a second edge is placed in the accommodation space, behind which second edge the first edge is able to engage for locking the snap pin. As only the first leg is provided with an edge for confining the snap pin in the accommodation space, it can be removed more easily from the accommodation space. By bending the first leg the first edge can get detached from the second edge in the accommodation space. Due to the smooth wall at the exterior of the second leg the snap pin is able to slide out of the accommodation space. Preferably the first edge is placed substantially at a side of the first leg that faces away from the second leg.

In one embodiment the two legs are placed between the covering cap and the stopper. In that case the stopper faces the centre of the conveyor belt and is able to fully close off the accommodation space. In such a conveyor belt, wherein the links are adapted for forming a substantially fully enclosed accommodation space, the connecting rod can substantially be fully enclosed by the links and be confined by the stopper at the outer ends of the accommodation space.

In one embodiment at least one of the two legs at its outer end that faces away from the stopper is connected to the covering cap. The covering cap is able to close off the accommodation space at or near the outer end that faces the side of the conveyor belt, as a result of which a substantially smooth side of the conveyor belt can be achieved. Furthermore the snap pin, at least after releasing the first edge from the second edge, can easily be drawn out of the accommodation space by pulling the covering cap.

In one embodiment an outer end of the other leg of the two legs, which outer end faces away from the stopper, is spaced apart from the covering cap in longitudinal direction.

In one embodiment at least the stopper is manufactured of an elastic material. In addition thereto or instead thereof in one embodiment at least one of the two legs can be manufactured of an elastic material. Due to the elastic material it is easier to bend at least the first leg for releasing and/or removing the snap pin.

In one embodiment the stopper is adapted for, at least in the position for closing off the accommodation space, substantially snugly extending into the accommodation space. In this embodiment near the outer end of the support member an opening may be arranged in the support member as a result of which at least the first leg is accessible to be pushed in, for releasing and/or removing the snap pin. Despite said opening in the support member the stopper, which in the position for closing off the accommodation space extends beyond said opening, is able to close off the accommodation space.

In an alternative embodiment the covering cap comprises a substantially cylindrical stopper, which, at least in the position for closing off the accommodation space, extends substantially snugly into the accommodation space.

In one embodiment the substantially cylindrical stopper comprises a substantially radially extending edge. In one embodiment the radially extending edge is formed by an O-ring placed around the cylindrical stopper.

In one embodiment the stopper substantially closes off the accommodation space.

According to an embodiment not part of tne invention the confining elements comprise a snap pin, wherein the snap pin comprises one substantially cylindrical stopper, and comprises two legs extending from the stopper in a longitudinal direction of the stopper, which legs are spaced apart in a direction transverse to the longitudinal direction, wherein a first leg at its side that faces the exterior of the snap pin comprises a substantially radially extending first edge, wherein a second leg at a side that faces an exterior of the snap pin comprises a substantially smooth wall, and wherein a second edge is placed in the accommodation space, behind which second edge the first edge is able to engage for locking the snap pin. As only the first leg is provided with an edge for confining the snap pin in the accommodation space, the snap pin can be removed more easily from the accommodation space. By bending the first leg the first edge can get detached from the second edge in the accommodation space. Due to the smooth wall at the exterior of the second leg the snap pin is able to slide out of the accommodation space. Preferably the first edge is placed substantially at a side of the first leg that faces away from the second leg. Furthermore, the two legs could be placed at a side of the stopper that faces the side of the conveyor belt. In that case the stopper faces the centre of the conveyor belt and is able to fully close off the accommodation space. In such a conveyor belt, wherein the links are adapted for forming a substantially fully enclosed accommodation space, the connecting rod can substantially be fully enclosed by the links and be confined by the stopper at the outer ends of the accommodation space. Also in this embodiment the legs are placed near the outer ends of the links and at that location are properly accessible for uncoupling the edges for removing the snap pin from the accommodation space.

Also at least one of the two legs at its outer end that faces away from the stopper is provided with a sealing flange. The sealing flange is able to close off the accommodation space at or near the outer end facing away from the side of the conveyor belt, as a result of which a substantially smooth side of the conveyor belt can be achieved.

And also an outer end of the other leg of the two legs, which outer end faces away from the stopper, is spaced apart from the sealing flange in longitudinal direction. In one embodiment the sealing flange is placed at an outer end of the first leg that faces away from the stopper.

This stopper could be manufactured of an elastic material. In addition thereto or instead thereof at least one of the two legs could be manufactured of an elastic material. Because of the elastic material it is easier to bend at least the first leg for removing the snap pin.

This stopper not part of the invention substantially closes off the accommodation space.

According to another embodiment at least one of the links comprises at least two connecting members extending in the direction of the conveyor belt, which connecting members connect the parts that are inserted into each other situated in the direction of the conveyor belt on both sides of the link, wherein the connecting members in the direction transverse to the conveyor belt are spaced apart from each other and wherein the connecting members are connected by an X-shaped element extending between the connecting members.

In one embodiment the connecting members and the X-shaped element are integrally formed.

In one embodiment the connecting members and the X-shaped element form at least a part of a support surface of the conveyor belt, for supporting goods to be transported.

According to a second aspect the invention provides a link for a conveyor belt as stated in claim 14.

Finally the invention relates to the use of a conveyor belt for transporting goods, provided with one or more of the characterising measures described above.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows a conveyor belt according to the invention, consisting of a series of elongated support members or links;
Figure 2 shows an embodiment of a support member or link of the conveyor belt of figure 1;
Figure 3 shows a first exemplary embodiment of a link according to the invention provided with a hinged covering cap with a snap pin, in opened condition;
Figure 4 shows a schematic view of the link of figure 3 with the covering cap in a closed condition;
Figure 5 shows a second exemplary embodiment of a link according to the invention provided with a hinged covering cap with a cylindrical stopper in the opened condition;
Figure 6 shows a schematic view of the link of figure 5 with the covering cap in a closed condition;
Figure 7 shows a further exemplary embodiment of a link with a hinged covering cap in opened condition; and
Figure 8 the link with hinged covering cap according to figure 7 in a closed condition;
Figure 9 shows a schematic partial view of a side of the conveyor belt with separate snap pins not part of the present invention;
Figure 10 shows a schematic view of a separate snap pin not part of the present invention; and
Figure 11 shows a schematic view in cross-section of a snap pin not part of the present invention placed in an outer end of the accommodation space in a link.

### DETAILED DESCRIPTION OF THE DRAWINGS

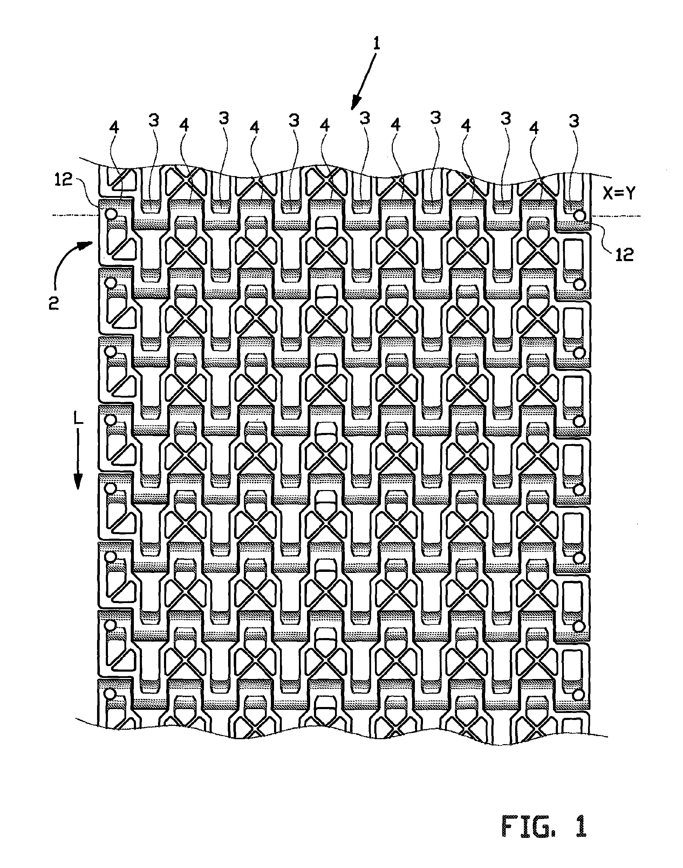

Figure 1 shows an exemplary embodiment of a conveyor belt 1 according to the invention. Said conveyor belt 1 consists of a series of elongated support members or links 2 for supporting the goods to be transported. The links 2 extend substantially transverse to the longitudinal direction of the conveyor belt L, and in said longitudinal direction L of the conveyor belt are placed in series one behind the other. The links 2 are placed such that two links that are adjacent in the direction of the conveyor belt L are partially inserted into each other. For that purpose at a first longitudinal side the links 2 are provided with first coupling members 3 that are provided with a through-opening 9 that extends substantially transverse to the conveyor belt direction L and are placed substantially in line x. Furthermore at a second longitudinal side, each link comprises second coupling members 4, which are also provided with a through-opening 9 that extends substantially transverse to the conveyor belt L and wherein the through-opening is placed substantially in line y.

When assembling the conveyor belt, the second coupling members 4 of a first link are placed in between the first coupling members 3 of a second link placed behind the first link, such that the through-openings 9 are placed substantially in line (the second coupling members are placed between the first coupling members such that the line y substantially coincides with the line x), for providing an accommodation space 9 for a connecting rod for connecting the adjacent links 2 so as to hinge, which accommodation space extends substantially transverse to the conveyor belt direction. Coupling links 2 in such a way into a conveyor belt 1 is known from the prior art and will therefore not be shown in detail in the figures or be described in this document.

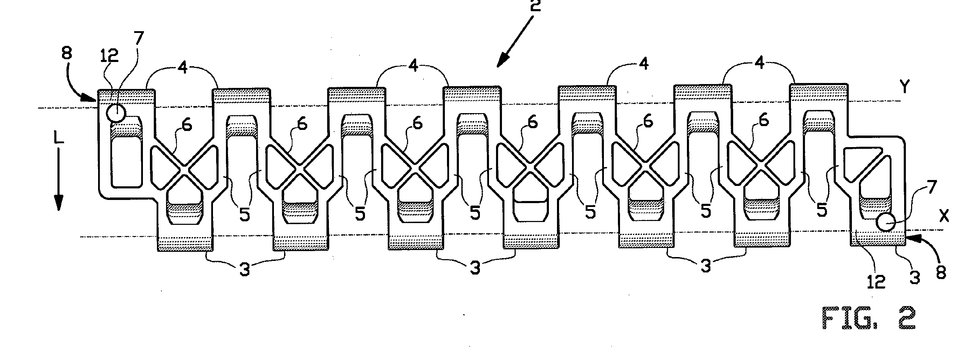

As shown in detail for the link 2 in figure 2, the first coupling members 3 are alternately connected to the second coupling members 4 by means of connecting members 5 that extend substantially in the conveyor belt direction L. The connecting members 5 are spaced apart from each other in the direction transverse to the conveyor belt 1. Between said connecting members 5 an x-shaped element 6 is placed. Said x-shaped element 6 contributes to the strength of the link 2 and also to the safety of fingers.

In this exemplary embodiment, as shown in figure 2, the x-shaped elements 6 are placed at the connecting members 5 that are both connected to a first coupling element 3. Between the connecting elements, that are both connected to a second connecting element 4, no x-shaped element is placed. In a further embodiment this may however be the case indeed. Due to the open geometry of the x-shaped elements, a large cooling capacity is achieved as via said open structure cooled air can be blown through the conveyor belt 1 against the products on the conveyor belt.

It furthermore becomes clear from figure 1 that the members 3, 4 that are inserted into each other completely enclose the accommodation space 9 for the connecting rod; the first coupling elements 3 and the second coupling elements 4 that ensure a connection of two adjacent links form a substantially through-going accommodation space without openings in the surface of the conveyor belt. Thus the connecting rod can be fully enclosed in the accommodation space, and will not contact product on the conveyor belt. As the connecting rod, which is usually made of a metal, is fully enclosed and cannot contact a product on the conveyor belt, said conveyor belt is particularly suitable for transporting food products, particularly in the preparation thereof.

In order to enclose the locking rod entirely, that means at its outer ends as well, the conveyor belt according to the invention is provided with confining elements, which will be described in more detail below, for closing off the outer ends 8 of the accommodation space. For detaching said confining elements, the links 2 can be provided with openings 7 near the outer ends of the accommodation space as a result of which the confining elements are accessible via the openings 7 in order to remove them out of the outer ends 8 of the accommodation space.

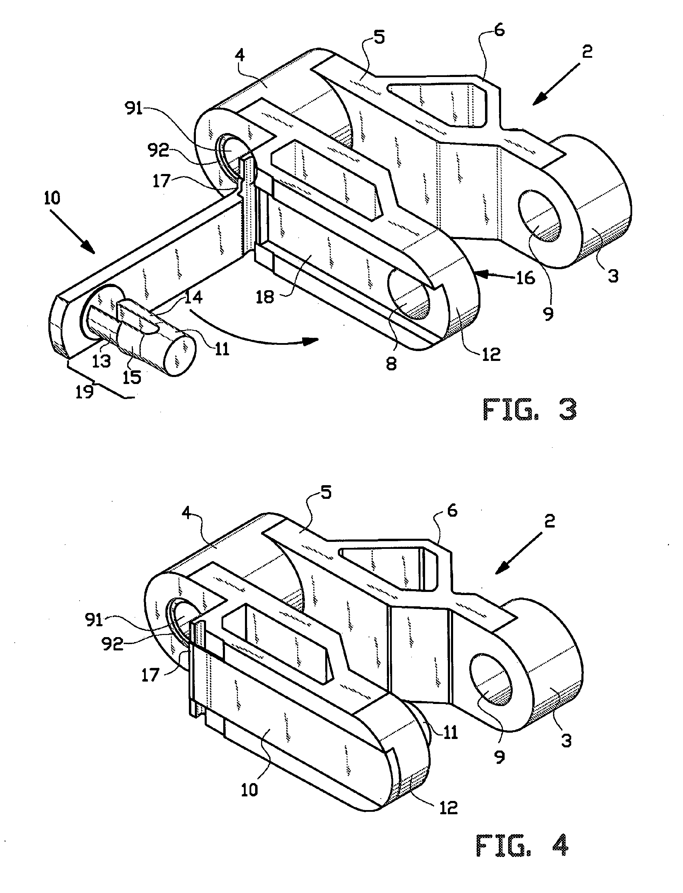

In a first exemplary embodiment, as shown in figures 3 and 4, closing off the accommodation space 9 can take place by means of a covering cap 10, which by means of an elastic connection 17 is hinged to an outer end of the link 2. In that case the covering cap 10 is integrally formed with the link. The covering cap 10 is provided with a snap pin 19 that can be placed in the accommodation space 8, as shown in figure 4.

The snap pin 19 preferably is made of an elastic material and comprises a substantially cylindrical stopper 11 that is placed in a substantially form-closed manner in an outer end 8 of the accommodation space 9, as schematically shown in figure 4. On the one hand the stopper 11 will substantially close off the accommodation space 9. On the other hand the snap pin 19, and particularly its cylindrical stopper 11, placed in an outermost coupling member 12 of a link 2, extends into an accommodation space 91 of the adjacent coupling member 4 of the next link. In that way the snap pin does not only ensure the closing off of the accommodation space 9, but also the mutual coupling of two adjacent links near the outer ends of the links that are situated at the side of the linked belt 1.

The snap pin 19 is provided with two legs 13, 14 extending between the covering cap 10 and the stopper 11, which legs are spaced apart in a direction transverse to a longitudinal direction of the snap pin 19. At a side facing the exterior of the snap pin 19 the first leg 13 is provided with a radially extending first edge 15. At a side facing the exterior of the snap pin 19 a second leg 14 is provided with a substantially smooth wall. At that location the accommodation space 8, 9 in this embodiment is provided with a second edge 16 at a side of the outermost coupling member 12 which side faces away from the edge of the conveyor belt. When placing the snap pin 19 in the accommodation space 8,9 the first edge 15 will engage behind the second edge 16 for locking the snap pin 19 in the conveyor belt 1. In that case the stopper 11 extends into the accommodation space 91 of an adjacent coupling member 4 of a next link 2.

In order to offer room to the first edge 15, the links 2 of this example are provided with a coupling member 4 including an accommodation space 91 which coupling member is adjacent to an outermost coupling member 12, wherein at a side of the adjacent coupling member 4 that faces an outermost coupling member the accommodation space 91 is provided with a substantially circular recess 92.

As described above the first edge 15 remains hooked behind the outermost coupling member 12 of the link 2. Thus the snap pin 19, that keeps the links together, is confined. The snap pin 19 can be removed again by pushing the elastic legs of the snap pin 19 together so that the raised first edge 15 no longer remains hooked behind the edge 16 of the outermost coupling member or the outermost eye 12 of the linked belt. In order to carry out this action the outermost coupling member 12 or the adjacent coupling member 4 can be provided with an opening that gives access to the elastic legs 13, 14 of the snap pin 19. In the example of figures 3 and 4, the outermost coupling member 12 is at least partially elastically bendable so that the outermost coupling member 12, at least temporarily, can be placed at a distance from the adjacent coupling member 4 of a further link, as a result of which access is provided to the elastic legs 13, 14 of the snap pin 19.

As shown in figure 3, one of the two legs 13, 14, particularly the first leg 13, at an outer end thereof facing away form the stopper 11 is connected to the covering cap 10. Preferably at least the covering cap 10 and the snap pin 19 are integrally formed.

As shown in detail in figure 3, the outer end of the link 2 is provided with a recess 18 that is formed such that the covering cap 10 can substantially be accommodated in the recess 18. In the closed condition, as shown in figure 4, the covering cap 10 sinks in the recess 18 such that a substantially smooth side of the link 2 is obtained.

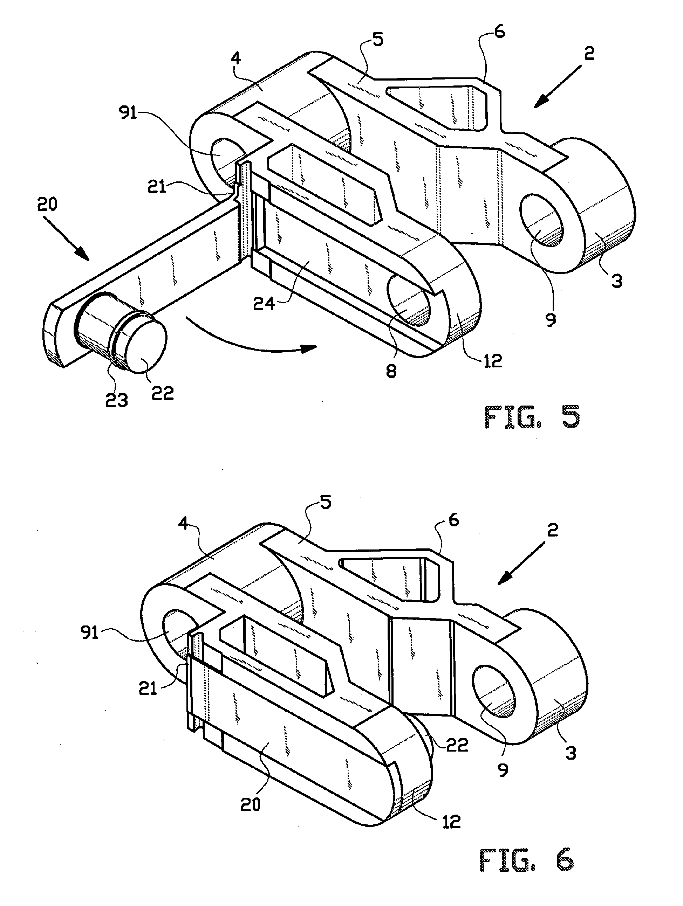

In a second exemplary embodiment, as shown in figures 5 and 6, the closing off of the outer and 9 of the accommodation space 9 can also take place by a covering cap 20 that is provided with a substantially cylindrical stopper 22 and which is hinged to an outer end of the link 2. In this case as well the covering cap 20 is integrally formed with the link 2, and connected to the link 2 with an elastic connection 21. At least in the position for closing off the outer end 8 of the accommodation space 9 as shown in figure 6, the stopper 22 extends substantially snugly into the outer end 8 of the accommodation space. In that case the length of the substantially cylindrical stopper 22 is selected such that it extends beyond the outermost coupling member 12 of the link, into the adjacent coupling member 4 of the adjacent link, as schematically shown in figure 6. Just like snap pin 19, the cylindrical stopper 22 of the covering cap 20 on the one hand ensures closing off the accommodation space 9, and on the other hand for at the outer end of the links coupling to adjacent links of the linked belt.

In the exemplary embodiment, as shown in figure 5, the substantially cylindrical stopper 22 is provided with a radially extending edge 23, that is formed by an O-ring placed around the cylindrical stopper 22. Said edge 23 ensures a clamping of the cylinder 22 in the round cavity of the outermost coupling member of the link. The substantially cylindrical stopper 22 is thus clamped in the outer end 8 of the accommodation space 9 for locking the covering cap in the closed condition. The radially extending edge 23 may also ensure a closing off of the outer end 8 of the accommodation space 9 for confining the connecting rod within the accommodation space.

As shown in detail in figure 5, the outer end of the link 2 is provided with a recess 24 that is formed such that the covering cap 20 can substantially be accommodated in the recess 24. In the closed condition, as shown in figure 6, the covering cap 20 sinks in the recess 24 such that a substantially smooth side of the link 2 is obtained.

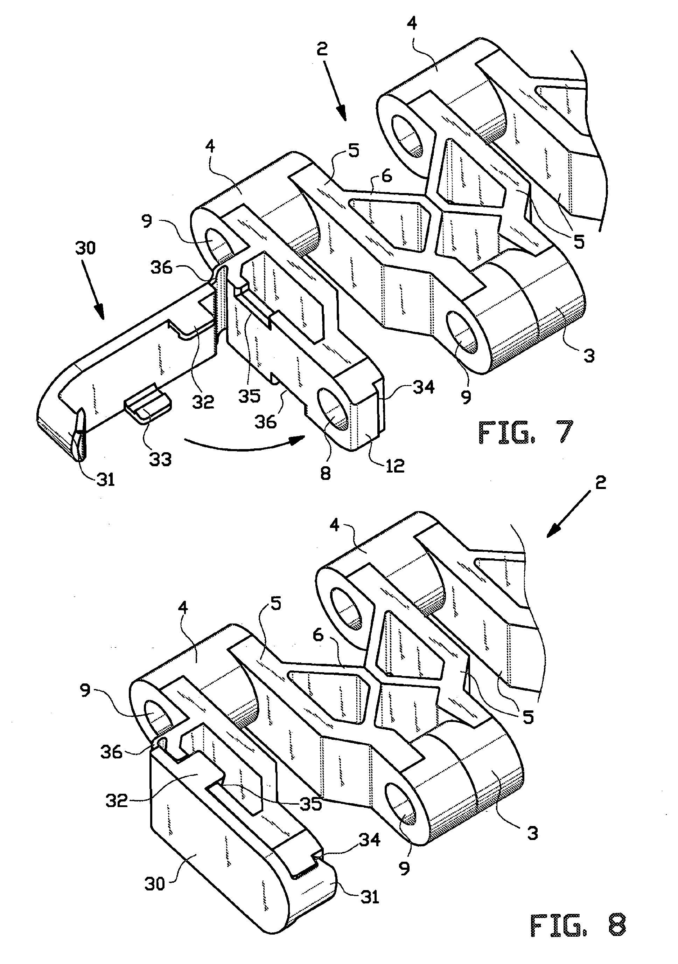

A third exemplary embodiment of a covering cap, that is integrally formed with the link 2, is shown in figures 7 and 8. Said covering cap 30 is provided with one or more snap closures 31, 32, 33 that are adapted for, at least in the position for closing off outer end 8 of the accommodation space 9 as shown in figure 8, engaging behind one or more edges 34, 35, 36, of the outermost coupling member 12 of link 2, for locking the covering cap 30. This covering cap 30 as well is hinged by means of a flexible member 36, and integrally formed with the link 2. As the covering cap 30 abuts the side of the link 2, and the side of the covering cap 30 that faces away from the link comprises a substantially smooth side (see figure 8) said smooth side forms the side of the link 2, at least in the closed condition of the covering cap 30 as shown in figure 8.

In the exemplary embodiment, as shown in figures 7 and 8, the covering cap 30 is not provided with a part that is inserted in the outer end 8 of the accommodation space. In said exemplary embodiment the connecting rod will extend into the accommodation space 8, 9 to near the outer end 8 of the accommodation space, that means into the outermost coupling member 12. In an alternative embodiment, the covering cap 30 can also be combined with a substantially cylindrical stopper 22 or a snap pin 19 as shown in the example of figures 3-6, and described above in detail.

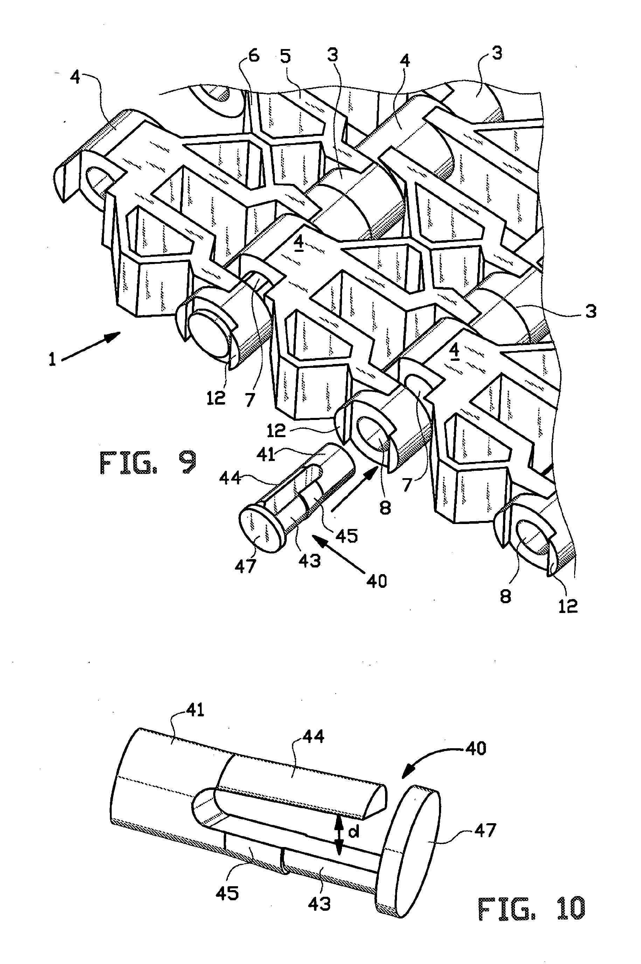

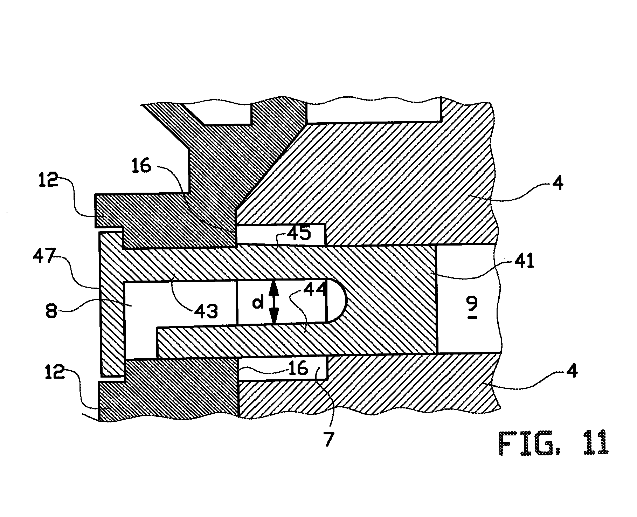

In an exemplary embodiment of a conveyor belt not according to the present invention, use is made of a separate confining element as shown in figures 9, 10 and 11. Figure 10 shows a separate snap pin 40 that is inserted at the side of the linked belt 1. The snap pin 40 is shown in more detail in figure 10. The snap pin 40 preferably is of an elastic material and comprises a substantially cylindrical stopper 41 that is placed in a substantially form-closed manner in an outer end 8 of the accommodation space 9 as schematically shown in figure 11. On the one hand the stopper 41 will substantially close off the accommodation space 9. On the other hand the snap pin 40, and particularly its cylindrical stopper 41, when placed in an outermost coupling member 12 of a link 2, extends into the adjacent coupling member 4 of the next link. In that way the snap pin 40 does not only ensure the closing off of the outer end 8 of the accommodation space 9 but also the mutual coupling of two adjacent links near the outer ends of the links that are situated at the side of the linked belt 1.

The snap pin 40 is provided with two legs 43, 44 extending therefrom in a longitudinal direction of the stopper 41, which legs are placed in a direction transverse to the longitudinal direction at distance d. At a side facing the exterior of the snap pin 40 the first leg 43 is provided with a radially extending first edge 45. At a side facing the exterior of the snap pin 40 the second leg 44 is provided with a substantially smooth wall. As in this embodiment the accommodation space 8, 9 is provided with a second edge 16, when placing the snap pin 40 in the accommodation space, the first edge 45 will engage behind the second edge 16 for locking the snap pin 40 in the conveyor belt 1. As shown in figure 11 the first edge 45 remains hooked behind the outermost coupling member 12 of the linked belt 1. In that way the snap pin 40, that keeps the links together, is confined. The snap pin 40 can be removed again by pushing the elastic legs of the snap pin 40 together so that the raised first edge 45 no longer remains hooked behind the edge 16 of the outermost coupling member or the outer eye 12 of the linked belt. To carry out this action an opening 7 is made at the upper side of the linked belt 1, so that access is given to the elastic legs 43, 44 of the snap pin 40.

As shown in figures 9, 10 and 11, one of the two legs 43, 44, particularly the first leg 43, at an outer end thereof that faces away from the stopper 41 is provided with a sealing flange 47. The sealing flange 47 is made such that it abuts the exterior of the outermost coupling member 12. Particularly the snap pin is locked by confining the outermost coupling member 12 between the first circumferential edge 45 on the one hand and the sealing flange 47 on the other hand.

As shown in figures 10 and 11, the outer end of the second leg 44 that faces away from the stopper 41 is spaced apart from the sealing flange 47 in longitudinal direction, as a result of which the first leg 43 and the second leg 44 are not coupled at an outer end facing away from the stopper 41. As a result the substantially elastic legs 43, 44 can easily be pushed together for removing the snap pin 40. Particularly the smooth exterior of the second leg 44 makes removing the snap pin 40 extremely simple, as only the first leg 43 needs to be pushed in via the opening 7, such that the first edge 45 no longer remains hooked behind the second edge 16. If the edges 45, 16 have been uncoupled, the snap pin 40 is able to slide along the smooth side of the second leg 44 out of the accommodation space.

## Claims

1. Conveyor belt (1) comprising a series of elongated support members or links (2) for supporting goods to be transported, which links (2) extend transverse to the conveyor belt (1) and are placed in series one behind the other in the direction (L) of the conveyor belt (1), wherein two links that are adjacent in the direction (L) of the conveyor belt (1) are at least partially inserted into each other, wherein the parts (3, 4) that are inserted into each other are provided with a through-opening (9, 91) that extends substantially transverse to the conveyor belt (1) and wherein the through-openings (9, 91) are placed substantially in line for providing an accommodation space for a connecting rod for connecting the adjacent links (2) to each other, which accommodation space extends substantially transverse to the conveyor belt (1), wherein the conveyor belt is provided with confining elements for at least at one side of the conveyor belt (1) closing off the accommodation space,
wherein
the confining elements comprise a covering cap (10, 20, 30), wherein the covering cap (10, 20, 30) is hinged (17, 21, 36) to an outer end of a link (2), which outer end is situated at the side of conveyor belt,
and wherein the covering cap (10, 20, 30) comprises a form closure (19, 23, 31) to keep the covering cap (10, 20, 30) in a position for closing off the outer ends of the accommodation space (8), **characterized in that** the covering cap is integrally formed with the link.

2. Conveyor belt according to claim 1, wherein the form closure comprises one or more snap closures (19, 31, 32, 33) that are adapted for, at least in the position for closing off the accommodation space, engaging behind one or more edges (16, 34, 35, 36) at or near the outer end of the link (2) for locking the covering cap (10, 30).

3. Conveyor belt according to claim 1 or 2, wherein the covering cap (10) comprises a snap pin (19), which in the position for closing off the accommodation space (8) at least partially extends into the accommodation space, wherein the snap pin (19) comprises a substantially cylindrical stopper (11) and comprises two legs (13, 14) extending from the stopper (11) in a longitudinal direction of the snap pin (19), which legs are spaced apart in a direction transverse to the longitudinal direction, wherein a first leg (13) at its side that faces the exterior of the snap pin (19) comprises a substantially radially extending first edge (15), wherein a second leg (14) at a side that faces an exterior of the snap pin (19) comprises a substantially smooth wall, and wherein a second edge (16) is placed in the accommodation space (8), behind which second edge (16) the first edge (15) is able to engage for locking the snap pin (19), preferably wherein the two legs are placed between the covering cap (10) and the stopper (11).

4. Conveyor belt according to claim 3, wherein at least one of the legs (13) at its outer end that faces away from the stopper (11) is connected to the covering cap (10), preferably wherein an outer end of the other leg (14) of the two legs, which outer end faces away from the stopper (11), is spaced apart from the covering cap (10) in longitudinal direction.

5. Conveyor belt according to claim 3 or 4, wherein at least one of the two legs (13, 14) is manufactured of an elastic material.

6. Conveyor belt according to claim 3, 4 or 5, wherein the stopper (11) is adapted for, at least in the position for closing off the accommodation space (8), substantially snugly extending into the accommodation space (8).

7. Conveyor belt according to claim 1 or 2, wherein the covering cap (10, 20) comprises a substantially cylindrical stopper (11, 22), which, at least in the position for closing off the accommodation space (8), extends substantially snugly into the accommodation space (8).

8. Conveyor belt according to claim 6 or 7, wherein the substantially cylindrical stopper (11, 22) comprises a substantially radially extending edge (15, 23), preferably wherein the radially extending edge is formed by an O-ring (23) placed around the cylindrical stopper (22).

9. Conveyor belt according to any one of the preceding claims, wherein at least one of the links (2) comprises at least two connecting members (5) extending in the direction (L) of the conveyor belt (1), which connecting members (5) connect the parts (3, 4) that are inserted into each other situated in the direction of the conveyor belt on both sides of the link (2), wherein the connecting members (5) in the direction transverse to the conveyor belt (1) are spaced apart from each other and wherein the connecting members (5) are connected by an X-shaped element (6) extending between the connecting members (5), preferably wherein the connecting members (5) and the X-shaped element (6) are integrally formed, preferably wherein the connecting members (5) and the X-shaped element (6) form at least a part of a support surface of the conveyor belt (1), for supporting goods to be transported.

10. Link for a conveyor belt for supporting goods to be transported, which link (2) is adapted to extend transverse to the longitudinal direction (L) of the conveyor belt (1) and adapted to be placed in series one behind another link in the direction (L) of the conveyor belt (1), so that two links that are adjacent in the direction (L) of the conveyor belt (1) are at least partially inserted into each other, wherein the parts (3, 4) of the link (2) that are inserted into each other are provided with a through-opening (9, 91) that extends substantially transverse to the link (2) and wherein the through-openings (9, 91) are placed substantially in line for providing an accommodation space for a connecting rod for connecting the adjacent links (2) to each other, which accommodation space extends substantially transverse to the longitudinal direction conveyor belt (1), wherein the link comprises confining elements for at least at one side of the conveyor belt (1) closing off the outer ends of the accommodation space (8), whereby the confining elements comprise a covering cap (10, 20, 30), wherein the covering cap (10, 20, 30) is hinged (17, 21, 36) to an outer end of the link (2), which outer end is situated at the side of the link, and wherein the covering cap (10, 20, 30) comprises a form closure (19, 23, 31) to keep the covering cap (10, 20, 30) in a position for closing off the outer ends of the accommodation space (8), provided with one or more of the characterising aspects described in any one of the preceding claims.

11. Use of a conveyor belt according to any one of the claims 1-10, for transporting goods.

## Patentansprüche

1. Förderband (1), das eine Reihe von langgestreckten Stützelementen oder Glieder (2) zum Stützen von zu transportierenden Gütern umfasst, wobei sich die Glieder (2) quer zu dem Förderband (1) erstrecken und hintereinander eine nach der anderen in der Richtung (L) des Förderbands (1) platziert sind, wobei zwei Verbindungen, die in der Richtung (L) des Förderbands (1) benachbart sind, wenigstens teilweise ineinander eingefügt sind, wobei die Abschnitte (3, 4), die ineinander eingefügt sind, mit einer Durchgangsöffnung (9, 91), die sich im Wesentlichen quer zum Förderband (1) erstreckt, versehen sind und wobei die Durchgangsöffnungen (9, 91) im Wesentlichen in Reihe platziert sind, um einen Aufnahmeraum für einen Verbindungsstab zum miteinander Verbinden der benachbarten Glieder (2) bereitzustellen, wobei der Aufnahmeraum sich im Wesentlichen quer zu dem Förderband (1) erstreckt, wobei das Förderband mit Begrenzungselementen versehen ist, um wenigstens auf einer Seite des Förderbands (1) den Aufnahmeraum abzuschließen, wobei die Begrenzungselemente eine Abdeckkappe (10, 20, 30) umfassen, wobei die Abdeckkappe (10, 20, 30) an einem äußeren Ende eines Gliedes (2) mit einem Gelenk (17, 21, 36) angebracht ist, wobei das äußere Ende an der Seite des Förderbands gelegen ist und wobei die Abdeckklappe (10, 20, 30) einen Formverschluss (19, 23, 31) umfasst, um die Abdeckkappe (10, 20 ,30) in einer Position zum Abschließen der äußeren Enden des Aufnahmeraums (8) zu halten, **dadurch gekennzeichnet, dass** die Abdeckkappe integral mit dem Glied ausgestaltet ist.

2. Förderband nach Anspruch 1, wobei der Formverschluss einen oder mehrere Schnappverschlüsse (19, 31, 32, 33) umfasst, die angepasst sind, um wenigstens in der Position zum Abschließen des Aufnahmeraums hinter einer oder mehreren Kanten (16, 34, 35, 36) an oder nahe bei dem äußeren Ende des Gliedes (2) zum Schließen der Abdeckkappe (10, 30) einzurasten.

3. Förderband nach Anspruch 1 oder 2, wobei die Abdeckkappe (10) einen Schnappstift (19) umfasst, welcher sich in der Position zum Abschließen des Aufnahmeraums (8) wenigstens teilweise in den Aufnahmeraum erstreckt, wobei der Schnappstift (19) einen im Wesentlichen zylindrischen Stopper (11) und zwei Schenkel (13, 14), die sich von dem Stopper (11) in einer Längsrichtung des Schnappstifts (19) erstrecken, umfasst, wobei die Schenkel in einer Richtung quer zu der Längsrichtung beabstandet sind, wobei ein erster Schenkel (13) an seiner Seite, die nach dem Äußeren des Schnappstifts (19) gerichtet ist, eine sich im Wesentlichen radial erstreckende erste Kante (15) umfasst, wobei ein zweiter Schenkel (14) an einer Seite, die nach einem Äußeren des Schnappstifts (19) gerichtet ist, eine im Wesentlichen glatte Wand umfasst und wobei eine zweite Kante (16) in dem Aufnahmeraum (8) platziert ist, wobei die erste Kante (15) hinter der zweiten Kante (16) zum Verriegeln des Schnappstifts (19) einrasten kann, wobei bevorzugt die beiden Schenkel zwischen der Abdeckkappe (10) und dem Stopper (11) platziert sind.

4. Förderband nach Anspruch 3, wobei wenigstens einer der Schenkel (13) an seinem äußeren Ende, das von dem Stopper (11) weg zeigt, mit der Abdeckkappe (10) verbunden ist, wobei bevorzugt ein äußeres Ende des anderen Schenkels (14) der beiden Schenkel, wobei das äußere Ende von dem Stopper (11) weg zeigt, in Längsrichtung von der Abdeckkappe (10) beabstandet ist.

5. Förderband nach Anspruch 3 oder 4, wobei wenigstens einer der beiden Schenkel (13, 14) aus einem elastischen Material hergestellt ist.

6. Förderband nach Anspruch 3, 4 oder 5, wobei der Stopper (11) angepasst ist, um sich wenigstens in der Position zum Abschließen des Aufnahmeraums (8) im Wesentlichen passgenau in den Aufnahmeraum (8) zu erstrecken.

7. Förderband nach Anspruch 1 oder 2, wobei die Abdeckkappe (10, 20) einen im Wesentlichen zylindrischen Stopper (11, 22) umfasst, welcher sich zumindest in der Position zum Abschließen des Aufnahmeraums (8) passgenau in den Aufnahmeraum (8) erstreckt.

8. Förderband nach Anspruch 6 oder 7, wobei der im Wesentlichen zylindrische Stopper (11, 22) eine sich im Wesentlichen radial erstreckende Kante (15, 23) umfasst, wobei bevorzugt die sich radial ersteckende Kante durch einen O-Ring (23),der um den zylindrischen Stopper (22) platziert ist, gebildet wird.

9. Förderband nach einem der vorherigen Ansprüche, wobei wenigstens eine der Glieder (2) wenigstens zwei Verbindungselemente (5) umfasst, die sich in die Richtung (L) des Förderbands (1) erstrecken, wobei die Verbindungselemente (5) die Abschnitte (3, 4) verbinden, die in der Richtung des Förderbands auf beiden Seiten des Gliedes (2) gelegen ineinander eingefügt sind, wobei die Verbindungselemente (5) in der Richtung quer zum Förderband (1) voneinander beabstandet sind und wobei die Verbindungselemente (5) durch ein X-förmiges Element (6), das sich zwischen den Verbindungselementen (5) erstreckt, verbunden sind, wobei bevorzugt die Verbindungselemente (5) und das X-förmige Element (6) integral ausgestaltet sind, wobei bevorzugt die Verbindungselemente (5) und das X-förmige Element (6) wenigstens einen Teil einer Stützfläche des Förderbands (1) zum Stützen von zu transportierenden Gütern bilden.

10. Glied für ein Förderband zum Stützen von zu transportierenden Gütern, wobei das Glied (2) angepasst ist, um sich quer zu der Längsrichtung (L) des Förderbands (1) zu erstrecken und um hintereinander eine nach der anderen in der Richtung (L) des Förderbands (1) platziert zu werden, sodass zwei Glieder, die in der Richtung (L) des Förderbands (1) benachbart sind, wenigstens teilweise ineinander eingefügt sind, wobei die Abschnitte (3, 4) des Gliedes (2), die ineinander eingefügt sind, mit einer Durchgangsöffnung (9, 91), die sich im Wesentlichen quer zu dem Glied (2) erstreckt, versehen sind und wobei die Durchgangsöffnungen (9, 91) im Wesentlichen in Reihe platziert sind, um einen Aufnahmeraum für einen Verbindungsstab zum Verbinden der benachbarten Glieder (2) miteinander bereitzustellen, wobei der Aufnahmeraum sich im Wesentlichen quer zu der Längsrichtung des Förderbands (1) erstreckt, wobei das Glied Begrenzungselemente umfasst, um wenigstens auf einer Seite des Förderbands (1) die äußeren Enden des Aufnahmeraums (8) abzuschließen, wobei die Begrenzungselemente eine Abdeckkappe (10, 20, 30) umfassen, wobei die Abdeckkappe (10, 20, 30) an einem äußeren Ende des Gliedes (2) mit einem Gelenk (17, 21, 26) angebracht ist, wobei das äußere Ende auf der Seite der Verbindung gelegen ist und wobei die Abdeckkappe (10, 20, 30) einen Formverschluss (19, 23, 31) umfasst, um die Abdeckkappe (10, 20, 30) in einer Position zum Abschließen der äußeren Enden des Aufnahmeraums(8) zu halten, wobei das Glied mit einem oder mehreren charakterisierenden Aspekten, die in einem der vorherigen Ansprüche beschrieben wurden, versehen ist.

11. Verwendung eines Förderbands nach Anspruch 1-10 zum Transportieren von Gütern.

## Revendications

1. Bande convoyeuse (1) comprenant une série d'organes de support allongés ou maillons (2) permettant de supporter des biens à transporter, lesquels maillons (2) s'étendent transversalement à la bande convoyeuse (1) et sont placés en série les uns derrière les autres dans la direction (L) de la bande convoyeuse (1), dans laquelle deux maillons qui sont adjacents dans la direction (L) de la bande convoyeuse (1) sont au moins partiellement insérés l'un dans l'autre, dans laquelle les parties (3, 4) qui sont insérées les unes dans les autres sont pourvues d'une ouverture traversante (9, 91) qui s'étend sensiblement transversalement à la bande convoyeuse (1) et dans laquelle les ouvertures traversantes (9, 91) sont placées sensiblement alignées pour fournir un espace de réception pour une tige de connexion permettant de raccorder les maillons adjacents (2) l'un à l'autre, lequel espace de réception s'étend sensiblement transversalement à la bande convoyeuse (1), dans laquelle la bande convoyeuse est pourvue d'éléments de confinement destinés, au moins au niveau d'un côté de la bande convoyeuse (1), à obturer l'espace de réception,
dans laquelle les éléments de confinement comprennent une coiffe de couverture (10, 20, 30), dans laquelle la coiffe de couverture (10, 20, 30) est fixée par charnière (17, 21, 36) à une extrémité externe d'un maillon (2), laquelle extrémité externe est située au niveau du côté de la bande convoyeuse, et dans laquelle la coiffe de couverture (10, 20, 30) comprend une fermeture assujettie par la forme (19, 23, 31) pour maintenir la coiffe de couverture (10, 20, 30) dans une position permettant d'obturer les extrémités externes de l'espace de réception (8), **caractérisée en ce que** la coiffe de couverture est formée solidairement avec le maillon.

2. Bande convoyeuse selon la revendication 1, dans laquelle la fermeture assujettie par la forme comprend une ou plusieurs fermetures à pression (19, 31, 32, 33) qui sont adaptées, au moins dans la position permettant d'obturer l'espace de réception, pour se mettre en prise derrière un ou plusieurs bords (16, 34, 35, 36) à ou près de l'extrémité externe du maillon (2) pour verrouiller la coiffe de couverture (10, 30).

3. Bande convoyeuse selon la revendication 1 ou 2, dans laquelle la coiffe de couverture (10) comprend une cheville à pression (19), qui dans la position permettant d'obturer l'espace de réception (8) s'étend au moins partiellement dans l'espace de réception, dans laquelle la cheville à pression (19) comprend un obturateur sensiblement cylindrique (11) et comprend deux jambes (13, 14) s'étendant depuis l'obturateur (11) dans une direction longitudinale de la cheville à pression (19), lesquelles jambes sont espacées dans une direction transversale à la direction longitudinale, dans laquelle une première jambe (13) au niveau de son côté qui est en regard de l'extérieur de la cheville à pression (19) comprend un premier bord (15) s'étendant sensiblement radialement, dans laquelle une seconde jambe (14) au niveau d'un côté qui est en regard d'un extérieur de la cheville à pression (19) comprend une paroi sensiblement lisse, et dans laquelle un second bord (16) est placé dans l'espace de réception (8), second bord (16) derrière lequel le premier bord (15) est apte à se mettre en prise pour verrouiller la cheville à pression (19), de préférence dans laquelle les deux jambes sont placées entre la coiffe de couverture (10) et l'obturateur (11).

4. Bande convoyeuse selon la revendication 3, dans laquelle au moins l'une des jambes (13) au niveau de son extrémité externe qui est en regard à distance de l'obturateur (11) est raccordée à la coiffe de couverture (10), de préférence dans laquelle une extrémité externe de l'autre jambe (14) des deux jambes, laquelle extrémité externe est en regard à distance de l'obturateur (11), est espacée de la coiffe de couverture (10) dans une direction longitudinale.

5. Bande convoyeuse selon la revendication 3 ou 4, dans laquelle au moins l'une des deux jambes (13, 14) est fabriquée en un matériau élastique.

6. Bande convoyeuse selon la revendication 3, 4 ou 5, dans laquelle l'obturateur (11) est adapté, au moins dans la position permettant d'obturer l'espace de réception (8), pour épouser sensiblement l'intérieur de l'espace de réception (8).

7. Bande convoyeuse selon la revendication 1 ou 2, dans laquelle la coiffe de couverture (10, 20) comprend un obturateur sensiblement cylindrique (11, 22) qui, au moins dans la position permettant d'obturer l'espace de réception (8), épouse sensiblement l'intérieur de l'espace de réception (8).

8. Bande convoyeuse selon la revendication 6 ou 7, dans laquelle l'obturateur sensiblement cylindrique (11, 22) comprend un bord s'étendant sensiblement radialement (15, 23), de préférence dans laquelle le bord s'étendant radialement est formé par un joint torique (23) placé autour de l'obturateur cylindrique (22).

9. Bande convoyeuse selon l'une quelconque des revendications précédentes, dans laquelle au moins l'un des maillons (2) comprend au moins deux organes de raccordement (5) s'étendant dans la direction (L) de la bande convoyeuse (1), lesquels organes de raccordement (5) raccordent les parties (3, 4) qui sont insérées l'une dans l'autre situées dans la direction de la bande convoyeuse des deux côtés du maillon (2), dans laquelle les organes de raccordement (5) dans la direction transversale à la bande convoyeuse (1) sont espacés l'un de l'autre et dans laquelle les organes de raccordement (5) sont raccordés par un élément en forme de X (6) s'étendant entre les organes de raccordement (5), de préférence dans laquelle les organes de raccordement (5) et l'élément en forme de X (6) sont formés solidairement, de préférence dans laquelle les organes de raccordement (5) et l'élément en forme de X (6) forment au moins une partie d'une surface de support de la bande convoyeuse (1), pour supporter des biens à transporter.

10. Maillon pour une bande convoyeuse permettant de supporter des biens à transporter, lequel maillon (2) est adapté pour s'étendre transversalement à la direction longitudinale (L) de la bande convoyeuse (1) et adapté pour être placé en série derrière un autre maillon dans la direction (L) de la bande convoyeuse (1), si bien que deux maillons qui sont adjacents dans la direction (L) de la bande convoyeuse (1) sont au moins partiellement insérés l'un dans l'autre, dans lequel les parties (3, 4) du maillon (2) qui sont insérées l'une dans l'autre sont pourvues d'une ouverture traversante (9, 91) qui s'étend sensiblement transversalement au maillon (2) et dans lequel les ouvertures traversantes (9, 91) sont placées sensiblement alignées pour fournir un espace de réception destiné à une tige de connexion permettant de raccorder les maillons adjacents (2) l'un à l'autre, lequel espace de réception s'étend sensiblement transversalement à la bande convoyeuse (1) de direction longitudinale, dans lequel le maillon comprend des éléments de confinement pour au moins un côté de la bande convoyeuse (1), obturant les extrémités externes de l'espace de réception (8), moyennant quoi les éléments de confinement comprennent une coiffe de couverture (10, 20, 30), dans lequel la coiffe de couverture (10, 20, 30) est fixée par charnière (17, 21, 36) à une extrémité externe du maillon (2), laquelle extrémité externe est située au niveau du côté du maillon, et dans lequel la coiffe de couverture (10, 20, 30) comprend une fermeture assujettie par la forme (19, 23, 31) pour maintenir la coiffe de couverture (10, 20, 30) dans une position permettant d'obturer les extrémités externes de l'espace de réception (8), pourvu d'un ou plusieurs des aspects caractéristiques décrits dans l'une quelconque des revendications précédentes.

11. Utilisation d'une bande convoyeuse selon l'une quelconque des revendications 1 à 10, pour transporter des biens.
